(19) Europäisches Patentamt / European Patent Office / Office européen des brevets

(11) **EP 4 715 946 A1**

(12) **EUROPEAN PATENT APPLICATION**
published in accordance with Art. 153(4) EPC

(43) Date of publication:
**25.03.2026 Bulletin 2026/13**

(21) Application number: **24901075.2**

(22) Date of filing: **04.12.2024**

(51) International Patent Classification (IPC):
**H01M 10/0587** (2010.01)    **H01M 10/052** (2010.01)
**H01M 10/0569** (2010.01)    **H01M 10/0568** (2010.01)
**H01M 10/0567** (2010.01)    **H01M 50/538** (2021.01)
**H01M 50/213** (2021.01)

(52) Cooperative Patent Classification (CPC):
**H01M 10/052; H01M 10/0567; H01M 10/0568;
H01M 10/0569; H01M 10/0587; H01M 50/213;
H01M 50/538;** Y02E 60/10; Y02P 70/50

(86) International application number:
**PCT/KR2024/019771**

(87) International publication number:
**WO 2025/121889 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **04.12.2023  KR 20230173834**

(71) Applicant: **LG Energy Solution, Ltd.
Seoul 07335 (KR)**

(72) Inventors:
• **KIM, Byung Ju
  Daejeon 34122 (KR)**
• **PARK, Ji Young
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CYLINDRICAL LITHIUM SECONDARY BATTERY**

(57)    The present invention relates to a cylindrical lithium secondary battery including an electrode assembly in which a positive electrode, a separator, and a negative electrode are sequentially stacked and wound in one direction, an electrolyte, and a battery case in which the electrode assembly and the electrolyte are accommodated, wherein the electrolyte includes one or more selected from the group consisting of a cyclic carbonate-based solvent and a linear carbonate-based solvent, a diffusion of ions in a battery (DIB) value defined by Equation 1 below is 150 mS/mm$^2$ to 160 mS/mm$^2$, and the viscosity of the electrolyte at 25 °C is 3.23 cP or less.

[Equation 1]

$$DIB(Diffusion\ of\ Ion\ in\ a\ Battery) = \frac{h}{R} \times \frac{1}{r} \times C \times t^+ \times 1000$$

In Equation 1 above, h (unit: mm) is the height of the cylindrical lithium secondary battery, R (unit: mm) is the diameter of the cylindrical lithium secondary battery, r (unit: mm) is the radius of a winding central portion of the electrode assembly, C (unit: mS/mm) is the ion conductivity of the electrolyte, and $t^+$ is the cation transport rate of the electrolyte.

EP 4 715 946 A1

[FIG.5]

**Description**

## TECHNICAL FIELD

### Cross-reference to Related Applications

This application claims the benefit of Korean Patent Application No. 10-2023-0173834, filed on December 4, 2023, in the Korean Intellectual Property Office, the disclosure of which is incorporated herein in its entirety by reference.

### Technical Field

The present invention relates to a cylindrical lithium secondary battery, and more particularly, to a cylindrical lithium secondary battery having excellent electrolyte solution impregnability, rapid charging properties, and low-temperature lifespan properties.

## BACKGROUND ART

With the development of technologies such as electric vehicles and portable electronic devices, the demand for lithium secondary batteries as an energy source is rapidly increasing.

Lithium secondary batteries can be classified into cylindrical, prismatic, and pouch-type batteries depending on the shape of a battery case, and among these, a cylindrical battery is manufactured in a form in which a jelly-roll type electrode assembly, which is manufactured by sequentially stacking a sheet-shaped positive electrode, a separator, and a negative electrode, and then winding the same in one direction, is accommodated in a cylindrical battery case, and then an upper portion of the battery case is covered and sealed by a cap plate. The positive electrode and the negative electrode are respectively provided with a positive electrode tab and a negative electrode tab in a strip form, and the positive electrode tap and the negative electrode tap are connected to an electrode terminal to be electrically connected to an external power source. For reference, a positive electrode terminal is a cap plate, and a negative electrode terminal is a battery case.

Particularly, in recent years, as the demand for high-capacity batteries has increased with the development of electric vehicle technology, the development and use of a large-sized cylindrical secondary battery having a large volume have been reviewed. A typical small-sized cylindrical battery commonly used, that is, a cylindrical secondary battery having a form factor of 1865 or 2170 has not been required to have high rapid charging performance.

On the other hand, since a large-sized cylindrical secondary battery is applied to electric vehicles, rapid charging properties are becoming very important. If rapid charging is performed at a high voltage, lithium is precipitated in a negative electrode, resulting in rapid deterioration of a battery, and heat is generated in a large amount around an electrode tab during a short period of time, which may cause a problem in which the battery deteriorates or ignites.

Meanwhile, in the case of a large-sized cylindrical lithium secondary battery, the internal space arrangement and the structure are different from those of a typical small-sized cylindrical lithium secondary battery, so that the large-sized cylindrical lithium secondary battery shows different characteristics from those of a typical cylindrical lithium secondary battery. For example, in a typical cylindrical lithium secondary battery, as an injection amount increases, an electrode assembly may be sufficiently impregnated with an electrolyte, so that the overall properties of the lithium secondary battery tend to increase. However, since the large-sized cylindrical secondary battery has different arrangement of an internal structure and space and different impregnation properties of a wound electrode assembly from a typical cylindrical lithium secondary battery, it is necessary to properly adjust properties of an electrolyte to be injected.

## DISCLOSURE OF THE INVENTION

### TECHNICAL PROBLEM

In order to solve the above-described problem, the present invention is to provide a cylindrical lithium secondary battery having improved electrolyte solution impregnability, thereby having excellent lifespan properties, and having excellent rapid charging properties and high-temperature lifespan properties.

### TECHNICAL SOLUTION

[1] The present invention provides a cylindrical lithium secondary battery including an electrode assembly in which a positive electrode, a separator, and a negative electrode are sequentially stacked and wound in one direction, an electrolyte, and a battery case in which the electrode assembly and the electrolyte are accommodated, wherein the electrolyte includes one or more selected from the group consisting of a cyclic carbonate-based solvent and a linear carbonate-based solvent, a diffusion of ions in a battery (DIB) value defined by Equation 1 below is 150 mS/mm$^2$ to 160 mS/mm$^2$, and the viscosity of the electrolyte at 25 °C is 3.23 cP or less.

[Equation 1]

$$DIB(Diffusion \ of \ Ion \ in \ a \ Battery) = \frac{h}{R} \times \frac{1}{r} \times C \times t^+ \times 1000$$

In Equation 1 above, h (unit: mm) is the height of the cylindrical lithium secondary battery, R (unit: mm) is the diameter of the cylindrical lithium secondary battery, r (unit: mm) is the radius of a winding central portion of the electrode assembly, C (unit: mS/mm) is the ion conductivity of theelectrolyte, and $t^+$ is the cation transport rate of the electrolyte.

[2] In [1] above, the present invention provides a cylindrical lithium secondary battery, wherein in Equation 1 above, the C is 1.00 mS/mm to 1.60 mS/mm.

[3] In [1] or [2] above, the present invention provides a cylindrical lithium secondary battery, wherein in Equation 1 above, $t^+$ is 0.25 to 0.60.

[4] In at least one among [1] to [3] above, the present invention provides a cylindrical lithium secondary battery, wherein the cyclic carbonate-based solvent and the linear carbonate-based solvent are included at a weight ratio of 10:90 to 35:65.

[5] In at least one among [1] to [4] above, the present invention provides a cylindrical lithium secondary battery, wherein the cyclic carbonate-based solvent is at least one solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

[6] In at least one among [1] to [5] above, the present invention provides a cylindrical lithium secondary battery, wherein the linear carbonate-based solvent is at least one solvent selected from the group consisting of dimethyl carbonate (DMC), diethyl carbonate (DEC), dipropyl carbonate, ethylmethyl carbonate (EMC), methylpropyl carbonate, and ethylpropyl carbonate.

[7] In at least one among [1] to [6] above, the present invention provides a cylindrical lithium secondary battery, wherein the electrolyte includes a lithium salt, wherein the lithium salt is included at a concentration of 0.5 M to 2.0 M in the electrolyte.

[8] In at least one among [1] to [7] above, the present invention provides a cylindrical lithium secondary battery, wherein the electrolyte includes an additive in an amount of 1.5 wt% or less.

[9] In at least one among [1] to [8] above, the present invention provides a cylindrical lithium secondary battery, wherein the additive is vinylene carbonate.

[10] In at least one among [1] to [9] above, the present invention provides a cylindrical lithium secondary battery, wherein the ratio (R/h) of the R to the h is 0.4 or greater.

[11] In at least one among [1] to [10] above, the present invention provides a cylindrical lithium secondary battery, wherein the cylindrical lithium secondary battery is a 46110 cell, a 48110 cell, a 4880 cell, or a 4680 cell.

[12] In at least one among [1] to [11] above, the present invention provides a cylindrical lithium secondary battery, wherein the cylindrical lithium secondary battery includes an uncoated portion in which an active material layer is not formed on at least a portion of the positive electrode and the negative electrode, wherein the positive electrode uncoated portion and the negative electrode uncoated portion are defined as electrode tabs.

[13] In [12] above, the present invention provides a cylindrical lithium secondary battery, wherein the positive electrode uncoated portion and the negative electrode uncoated portion are formed along a direction in which the electrode assembly is wound on one side end portion of the positive electrode and the negative electrode, respectively, and a current collecting plate is coupled to each of the positive electrode uncoated portion and the negative electrode uncoated portion, wherein the current collecting plate is connected to an electrode terminal.

[14] In [12] above, the present invention provides a cylindrical lithium secondary battery, wherein the positive electrode and negative electrode uncoated portions are processed in the form of a plurality of independently bendable segment pieces, wherein at least some of the plurality of segment pieces are bent toward the winding center of the electrode assembly.

[15] In [13] above, the present invention provides a cylindrical lithium secondary battery, wherein at least some of the plurality of bent segment pieces are overlapped on an upper end and a lower end of the electrode assembly, wherein the current collecting plate is coupled onto the plurality of overlapped segment pieces.

[16] The present invention provides a battery pack including the cylindrical lithium secondary battery according to any one among [1] to [15] above as a unit cell.

## ADVANTAGEOUS EFFECTS

A cylindrical lithium secondary battery according to the present invention includes a cyclic carbonate and a linear carbonate in an electrolyte, and allows the viscosity of the electrolyte to satisfy a specific range while adjusting the ion conductivity of the electrolyte, the cation transport rate, the diameter and height of the cylindrical secondary battery, and the radius of a winding central portion of an electrode assembly to satisfy specific relationship equations, so that it is possible to improve electrolyte solution impregnability without improving an injection amount of electrolyte, and accordingly, it is possible to improve output, rapid charging properties, lifespan properties, and high-temperature storage properties of the lithium secondary battery. In addition, a cylindrical lithium secondary battery according to the present invention suppresses a lithium plating phenomenon in which lithium is precipitated in a negative electrode during rapid charging, and thus, may have excellent rapid charging properties, and may have excellent high-temperature lifespan properties.

## BEST DESCRIPTION OF THE DRAWING

FIG. 1 is a view showing a stacked state before winding an electrode assembly according to the present invention.
FIG. 2 is a cross-sectional view showing a structure of an electrode of an electrode assembly according to an embodiment of the present invention.
FIG. 3 is a view for describing a structure of an electrode assembly according to an embodiment of the present invention.
FIG. 4 is a cross-sectional view showing a structure of a lithium secondary battery according to an embodiment of the present invention.
FIG. 5 is a cross-sectional view showing a structure of a lithium secondary battery according to another embodiment of the present invention.
FIG. 6 is a view for describing a battery pack according to the present invention.

## BEST MDOE FOR CARRYING OUT THE INVENTION

Hereinafter, the present invention will be described in more detail.
It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.
The terms used herein are only used to describe exemplary embodiments, and are not intended to limit the present invention. Singular expressions include plural expressions unless the context clearly indicates otherwise.
In the present specification, it should be understood that the term, "include," "comprise," or"have" is intended to specify the presence of stated features, numbers, steps, elements, or combinations thereof, but do not preclude the presence or addition of one or more other features, numbers, steps, elements, or combinations thereof.
In the present invention, a "single-particle type" means a particle formed by gathering equal to or fewer than 30 sub-particles. A sub-particle unit constituting a single-particle type particle will be referred to as a nodule. The single-particle type particle includes a single particle composed of 1 nodule and a pseudo-single particle which is a composite of 2 to 30 nodules.
The "nodule" is a sub-particle unit constituting a single particle and a quasi-single particle, and may be a single crystal with no crystalline grain boundaries, or a polycrystal with no grain boundaries in appearance when observed with a field of view of 5000 to 20000 times using a scanning electron microscope.
In the present invention, a "secondary particle" means a particle formed by gathering more than 30 sub-particles. A sub-particle constituting the secondary particle will be referred to as a "primary particle" in order to distinguish the same from a sub-particle constituting the single-particle type particle.
In the present invention, the "particle" is a concept including any one or all of a single particle, a quasi-single particle, a primary particle, a nodule, and a secondary particle.
In the present specification, the "ion conductivity (C) of an electrolyte" may be measured under the condition of 25 °C using the Seven Excellence S700 equipment of METTLER TOLEDO Co., after filling a bath with an electrolyte such that a probe for measuring ion conductivity is immersed, and then using the immersed probe. In this case, the electrolyte may be an electrolyte injected into a lithium secondary battery and underwent an activation process, but is not limited thereto.

The activation may be performed by performing charging to 4.2 V under the conditions of 0.2 C-rate and 0.01 C cut-off, and performing discharging to 2.8 V at a 0.2 C-rate.

In the present specification, the "cation transport rate ($t^+$) of an electrolyte" means the ratio of a current carried by a cation to the total current flowing in the electrolyte. The "cation transport rate ($t^+$) of an electrolyte" may be measured at 25 °C using a VMP3 Multichannel potentiostat of Bio-logic Science Instruments Co., after manufacturing a coin cell in the form of lithium (Li) metal/electrolyte/lithium (Li) metal by using an electrolyte included in a lithium secondary battery according to the present invention. In this case, the electrolyte may be an electrolyte injected into a lithium secondary battery and underwent an activation process, but is not limited thereto. The activation may be performed by performing charging to 4.2 V under the conditions of 0.2 C-rate and 0.01 C cut-off, and performing discharging to 2.8 V at a 0.2 C-rate.

Specifically, the cation transport rate may be obtained by (1) measuring the resistance and current of a cell in an initial state, (2) applying a voltage of 10 mV to the cell in the initial state and monitoring a current drop to measure the resistance and current of the cell in a steady state in which a current value remained constant after 10 hours, and (3) calculating the cation transport rate by Equation A below.

[Equation A]

$$\text{Cation transport rate } (t^+) = \frac{i_{ss}(\Delta V - i_0 R^0)}{i_0(\Delta V - i_{ss}R^{ss})}$$

In Equation A above, $\Delta V$ is the applied voltage change (10 mV), the $i_0$ is the current (unit: mA) of the cell in the initial state, the $R^0$ is the resistance (unit: $\Omega$) of the cell in the initial state, the $i_{ss}$ is the current (unit: mA) of the cell in the steady state, and the $R^{ss}$ is the resistance (unit: $\Omega$) of the cell in the steady state.

In the present specification, the "viscosity of an electrolyte at 25 °C" may be measured at 25 °C and 0.1 rpm to 1 rpm using a rheometer (Brookfield DVNXCP Rheometer). In this case, the electrolyte may be an electrolyte injected into a lithium secondary battery and underwent an activation process, and the activation may be performed by performing charging to 4.2 V under the conditions of 0.2 C-rate and 0.01 C cut-off, and performing discharging to 2.8 V at a 0.2 C-rate.

In the present specification, the "radius of a winding central portion" means a distance from a center point to a winding start point in an electrode assembly in a state in which a separator, a negative electrode, a separator, and a positive electrode are sequentially stacked and wound, and the winding start point corresponds to an end point at which the winding of the electrode assembly starts.

A typical cylindrical lithium secondary battery increases the overall performance of a battery by improving electrolyte solution impregnability through a method of increasing a porosity of an electrode or an injection amount of an electrolyte. However, recently, in the case of a large-sized cylindrical lithium secondary battery, a tab-less structure or the like is applied to solve a problem such as an increase in caloric value inside the battery due to an increase in volume of the battery, so that the large-sized cylindrical lithium secondary battery has an internal space arrangement and a structure different from those of a typical cylindrical lithium secondary battery, and has different impregnation properties. Accordingly, in a recent large-sized cylindrical lithium secondary battery, an injection amount of electrolyte and the effect of improving electrolyte solution impregnability is not in a proportional relationship, and if the injection amount of electrolyte is increased to a predetermined level or higher, a gas is generated due to the decomposition of components in the electrolyte, which may result in rather degrading the electrolyte solution impregnability due to an increase in pressure inside the battery. Therefore, in order to improve electrolyte solution impregnability in a large-sized cylindrical lithium secondary battery, it is necessary to adjust properties of an electrolyte solution itself.

Meanwhile, the large-sized cylindrical lithium secondary battery is required to have excellent rapid charging properties and high-temperature lifespan properties to be applied to technologies such as an electric vehicle.

Therefore, as a result of repeated research to develop a cylindrical lithium secondary battery having improved electrolyte solution impregnability and excellent rapid charging properties and low-temperature lifespan properties without increasing an injection amount of electrolyte solution to a predetermined level or higher, the present inventors have found that by allowing the viscosity of the electrolyte to satisfy a specific range, and adjusting the ion conductivity and cation transport rate in the electrolyte according to a structure of the battery, it is possible to improve electrolyte solution impregnability, rapid charging properties, and high-temperature lifespan properties, and have completed the present invention.

The cylindrical lithium secondary battery according to the present invention includes at least one among configurations disclosed below, and may include any combination of technically possible configurations among the following configurations.

Hereinafter, the present invention will be described in more detail.

**Cylindrical lithium secondary battery**

The cylindrical lithium secondary battery according to the present invention is a cylindrical lithium secondary battery including an electrode assembly in which a positive electrode, a separator, and a negative electrode are sequentially stacked and wound in one direction, an electrolyte, and a battery case in which the electrode assembly and the electrolyte are accommodated, wherein the electrolyte includes one or more selected from the group consisting of a cyclic carbonate and a linear carbonate, a diffusion of ions in a battery (DIB) value defined by Equation 1 below is 150 mS/mm$^2$ to 160 mS/mm$^2$, and the viscosity of the electrolyte at 25 °C is 3.23 cP or less.

[Equation 1]

$$DIB(Diffusion\ of\ Ion\ in\ a\ Battery) = \frac{h}{R} \times \frac{1}{r} \times C \times t^+ \times 1000$$

In Equation 1 above, h (unit: mm) is the height of the cylindrical lithium secondary battery, R (unit: mm) is the diameter of the cylindrical lithium secondary battery, r (unit: mm) is the radius of a winding central portion of the electrode assembly, C (unit: mS/mm) is the ion conductivity of the electrolyte, and t$^+$ is the cation transport rate of the electrolyte.

The DIB value corresponds to a parameter which defines an organic relationship between the height and diameter of the cylindrical secondary battery, the radius of the winding central portion of the electrode assembly, the ion conductivity of the electrolyte, and the cation transport rate of the electrolyte. If the height and diameter of the cylindrical secondary battery, the radius of the winding central portion of the electrode assembly, the ion conductivity of the electrolyte, and the cation transport rate of the electrolyte, which form the above-described DIB value, are mutually adjusted such that the DIB value satisfies a specific range, rapid charging properties and high-temperature storage properties of a lithium secondary battery may be improved without excessively increasing an injection amount of the electrolyte injected into the lithium secondary battery.

The DIB value defined by Equation 1 above is 150 mS/mm$^2$ to 160 mS/mm$^2$. Specifically, the DIB value defined by Equation 1 above may be 150 mS/mm$^2$ or greater, 150.5 mS/mm$^2$ or greater, 151 mS/mm$^2$ or greater, 151.5 mS/mm$^2$ or greater, 152 mS/mm$^2$ or greater, 152.5 mS/mm$^2$ or greater, 153 mS/mm$^2$ or greater, 153.5 mS/mm$^2$ or greater, 154 mS/mm$^2$ or greater, 154.5 mS/mm$^2$ or greater, 155 mS/mm$^2$ or greater, or 155.5 mS/mm$^2$ or greater, and 160 mS/mm$^2$ or less, 159.5 mS/mm$^2$ or less, 159 mS/mm$^2$ or less, 158.5 mS/mm$^2$ or less, 158 mS/mm$^2$ or less, 157.5 mS/mm$^2$ or less, 157 mS/mm$^2$ or less, 156.5 mS/mm$^2$ or less, or 156 mS/mm$^2$ or less. For example, the DIB value defined by Equation 1 above may be 150 mS/mm$^2$ to 160 mS/mm$^2$, preferably 152 mS/mm$^2$ to 159 mS/mm$^2$, more preferably 154 mS/mm$^2$ to 158.5 mS/mm$^2$, and even more preferably 155 mS/mm$^2$ to 158 mS/mm$^2$. If the above-described range is satisfied, the electrolyte solution impregnability is excellent, thereby preventing a lithium plating phenomenon, lifespan properties and output properties may be improved, and rapid charging properties and high-temperature lifespan properties may be excellent.

The h may be 70 mm or greater, preferably 75 mm or greater, and more preferably 80 mm or greater, and the R may be 40 mm or greater, preferably 42 mm or greater, and more preferably 46 mm or greater. If the above-described range is satisfied, excellent capacity properties may be implemented.

The ratio of the R to the h (R/h, a form factor ratio) may be 0.4 or greater, preferably 0.4 to 0.8, and more preferably 0.5 to 0.8. If the range of the form factor ratio is satisfied, high-capacity properties as a large-sized cylindrical lithium secondary battery may be implemented.

The r may be 1 mm to 10 mm, preferably 2 mm to 9 mm, and more preferably 3 mm to 8 mm. If the above-described range is satisfied, an electrode may be suppressed from being detached by the stress caused by bending in an electrode assembly in a wound form, and the capacity may by secured to the maximum.

The C may be 1.00 mS/mm to 1.60 mS/mm. Specifically, the C may be 1.00 mS/mm or greater, 1.05 mS/mm or greater, 1.10 mS/mm or greater, 1.15 mS/mm or greater, 1.20 mS/mm or greater, or 1.25 mS/mm or greater, and 1.60 mS/mm or less, 1.55 mS/mm or less, 1.50 mS/mm or less, 1.45 mS/mm or less, 1.40 mS/mm or less, 1.35 mS/mm or less, or 1.30 mS/mm or less. For example, the C may be 1.00 mS/mm to 1.60 mS/mm, preferably 1.10 mS/mm to 1.45 mS/mm, more preferably 1.15 mS/mm to 1.40 mS/mm, and even more preferably 1.20 mS/mm to 1.35 mS/mm. If the above-described range is satisfied, ions which may move are sufficient relative to the amount of current, so that a lithium plating phenomenon may be suppressed by preventing overvoltage from occurring in the negative electrode, and rapid charging properties may be improved. In addition, even if electrolyte decomposition or the like occurs at a high temperature, sufficient ion conductivity may be secured, so that high-temperature lifespan properties may be excellent, and excessive degradation in the mobility of ions in the electrolyte at a low temperature may be suppressed, so that low-temperature lifespan properties may be excellent.

The ion conductivity C of the electrolyte may be suitably adjusted by the type and content of an organic solvent, the concentration of a lithium salt, the type and content of an additive, and the like. Specifically, the ion conductivity in the electrolyte during charging and discharging of the lithium secondary battery may be excellent as the ratio at which a salt in the electrolyte is present as a free ion is higher, and in this case, in which form the salt in the electrolyte may be present when dissolved in a solvent is determined by the type and content of an organic solvent of the electrolyte, the concentration of a lithium salt, an additive, and the like, so that it is possible to adjust an ion conductivity C value of the electrolyte by the above-described factors.

The $t^+$ may be 0.25 to 0.60. Specifically, the $t^+$ may be 0.25 or greater, 0.27 or greater, 0.30 or greater, 0.32 or greater, 0.35 or greater, 0.37 or greater, 0.40 or greater, or 0.42 or greater, and 0.60 or less, 0.57 or less, 0.55 or less, 0.52 or less, 0.50 or less, 0.47 or less, 0.45 or less, or 0.43 or less. For example, the $t^+$ may be 0.25 to 0.60, preferably 0.30 to 0.55, more preferably 0.35 to 0.50, and even more preferably 0.40 to 0.45. If the above-described range is satisfied, under the condition of rapid charging, the occurrence of ohmic resistance due to the formation of a concentration gradient in the electrolyte may be prevented, so that lifespan properties during rapid charging may be improved, and high-temperature lifespan properties may be excellent.

The cation transport rate $t^+$ of the electrolyte may be suitably adjusted by the type and content of an organic solvent, the concentration of a lithium salt, the type and content of an additive, and the like. Specifically, as for the efficiency of the movement of lithium ions in the electrolyte during charging and discharging of the lithium secondary battery, the solubility and viscosity of lithium ions in the organic solvent may affect the mobility of lithium ions, and the polarity of organic solvent molecules may also affect the dissociation of lithium ions. In addition, if the concentration of the lithium salt is too low, the ion conductivity may be lowered, and if too high, ion pair formation of lithium ions and anions may increase, thereby limiting the cation transport rate. In the case of the additive, the formation of a solid electrolyte interface (SEI) film at the interface between an electrode and the electrolyte may be affected, thereby promoting efficient movement of lithium ions, or the mobility of anions may be improved, thereby degrading the cation transport rate. Therefore, the cation transport rate $t^+$ of the electrolyte may suitably adjust the type and content of an organic solvent, the concentration of a lithium salt, the type and content of an additive, and the like such that the above-described DIB value satisfies 150 mS/mm$^2$ to 160 mS/mm$^2$.

Next, each component of the cylindrical lithium secondary battery according to the present invention will be described in more detail.

The cylindrical lithium secondary battery according to the present invention includes an electrode assembly in which a positive electrode, a separator, and a negative electrode are sequentially stacked and wound in one direction, an electrolyte, and a battery case in which the electrode assembly and the electrolyte are accommodated.

**(1) Electrode assembly**

In the electrode assembly according to the present invention, a positive electrode, a separator, and a negative electrode are sequentially stacked and wound in one direction.

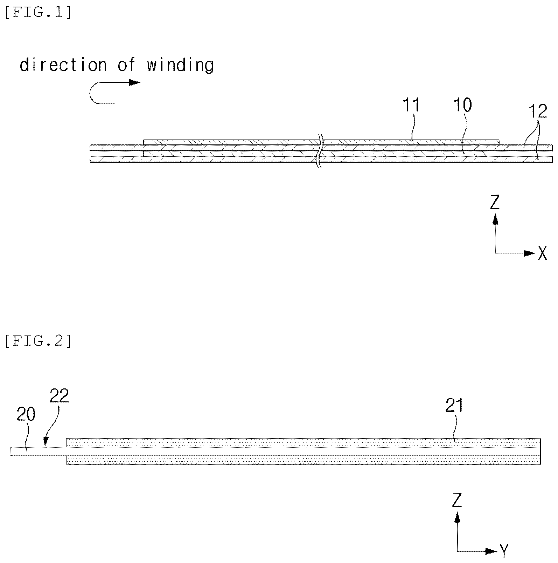

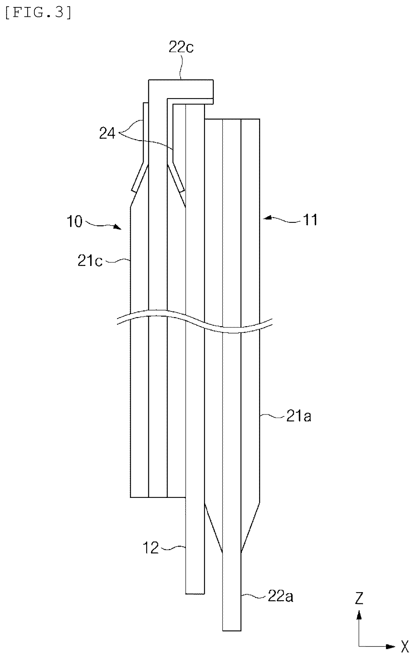

FIG. 1 illustrates a stacked structure before winding the electrode assembly according to an embodiment of the present invention, FIG. 2 illustrates a cross-sectional structure of an electrode plate (a positive electrode or a negative electrode) according to an embodiment of the present invention, and FIG. 3 illustrates a structure of the electrode assembly according to an embodiment of the present invention.

Referring to FIG. 1 and FIG. 2, an electrode assembly A of the present invention may be manufactured by winding a stacked body, which is formed by sequentially stacking a separator 12, a positive electrode 10, a separator 12, and a negative electrode 11 at least once, in one direction X.

Hereinafter, each component of the electrode assembly of the present invention will be described in more detail.

**1) Positive electrode**

The positive electrode may be manufactured by a method of applying a positive electrode slurry on one surface or both surfaces of a sheet-shaped positive electrode current collector, removing a solvent of the positive electrode slurry through a drying process, and then performing roll-pressing. Meanwhile, a positive electrode including an uncoated portion may be manufactured by a method of not applying the positive electrode slurry in some regions of the positive electrode current collector, for example, one end portion of the positive electrode current collector, during the application of the positive electrode slurry described above.

In addition, the positive electrode slurry may be prepared by dispersing a positive electrode material according to the present invention in a solvent such as dimethyl sulfoxide (DMSO), isopropyl alcohol, N-methylpyrrolidone (NMP), acetone or water.

The positive electrode thus manufactured includes a positive electrode current collector, and a positive electrode active material layer, wherein the positive electrode active material layer may include a positive electrode active material.

As the positive electrode current collector, various positive electrode current collectors used in the art may be used. For example, as the positive electrode current collector, stainless steel, aluminum, nickel, titanium, fired carbon, or aluminum or stainless steel that is surface-treated with one of carbon, nickel, titanium, silver, and the like may be used. The positive electrode current collector may typically have a thickness of $3\ \mu m$ to $500\ \mu m$, and microscopic irregularities may be formed on the surface of the positive electrode current collector to improve the adhesive force of the positive electrode active material. The positive electrode current collector may be used in various forms such as a film, a sheet, a foil, a net, a porous body, a foam, and a non-woven body.

The positive electrode active material layer may be positioned on the positive electrode current collector, and specifically, may be positioned on one surface or both surfaces of the positive electrode current collector. The positive electrode active material layer may have a single-layered structure or a multi-layered structure of two or more layers.

As the positive electrode active material, positive electrode active materials commonly used in the art may be used, and the type thereof is not particularly limited. The positive electrode active material is a compound capable of reversible intercalation and de-intercalation of lithium, and specifically, may include a lithium transition metal composite oxide including at least one transition metal selected from the group consisting of nickel, cobalt, manganese, and aluminum, and lithium, preferably a lithium transition metal composite oxide including a transition metal containing nickel, cobalt, or manganese, and lithium.

More specifically, the lithium transition metal composite oxide may be a lithium-manganese-based oxide (e.g., $LiMnO_2$, $LiMn_2O_4$, etc.), a lithium-cobalt-based oxide (e.g., $LiCoO_2$, etc.), a lithium-nickel-based oxide (e.g., $LiNiO_2$, etc.), a lithium-nickel-manganese-based oxide (e.g., $LiNi_{1-y}Mn_YO_2$ (wherein $0<Y<1$), $LiMn_{2-z}Ni_zO_4$ (wherein $0 < Z < 2$), etc.), a lithium-nickel-cobalt-based oxide (e.g., $LiNi_{1-Y1}Co_{Y1}O_2$ (wherein $0<Y1<1$), etc.), a lithium-manganese-cobalt-based oxide (e.g., $LiCo_{1-Y2}Mn_{Y2}O_2$ (wherein $0<Y2<1$), $LiMn_{2-z1}Co_{z1}O_4$ (wherein $0 < Z1 < 2$, etc.), a lithium-nickel-manganese-cobalt-based oxide (e.g., $Li(Ni_pCo_qMn_{r1})O_2$ (wherein $0 < p < 1$, $0 < q < 1$, $0 < r1 < 1$, and $p+q+r1=1$) or $Li(Ni_{p1}Co_{q1}Mn_{r2})O_4$ (wherein $0 < p1 < 2$, $0 < q1 < 2$, $0 < r2 < 2$, and $p1+q1+r2=2$), etc.), or a lithium-nickel-cobalt-transition metal (M) oxide (e.g., $Li(Ni_{p2}Co_{q2}Mn_{r3}M_{S2})O_2$ (wherein M is selected from the group consisting of Al, Fe, V, Cr, Ti, Ta, Mg, and Mo, and p2, q2, r3, and s2 are each an atomic fraction of independent elements, wherein $0 < p2 < 1$, $0 < q2 < 1$, $0 < r3 < 1$, $0 < s2 < 1$, and $p2+q2+r3+s2=1$), etc.) and the like, and any one thereof or a compound of two or more thereof may be included. Among these, in terms of being able to increase the capacity and stability of a battery, the lithium transition metal composite oxide may be $LiCoO_2$, $LiMnO_2$, $LiNiO_2$, a lithium nickel-cobalt-manganese-based oxide (e.g., $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, etc.), or a lithium-nickel-cobalt-aluminum-based oxide (e.g., $Li(Ni_{0.8}Co_{0.15}Al_{0.05})O_2$, etc.), and the like, and when considering a remarkable effect of improvement according to the control of types and content ratios of constituent elements forming a lithium transition metal composite oxide, the lithium transition metal composite oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and the like, and any one thereof or a mixture of two or more thereof may be used.

Preferably, the positive electrode active material may include a lithium nickel-cobalt-manganese-based oxide, and more preferably, may include a lithium nickel-cobalt-manganese-based oxide containing nickel (Ni) in 80 mol% or greater among all metals excluding lithium, and specifically, may include a lithium nickel-cobalt-manganese-based oxide represented by Formula 1 below.

$$[\text{Formula 1}] \qquad Li_{a1}[Ni_{b1}Co_{c1}Mn_{d1}M^1_{e1}]O_2$$

In Formula 1 above, $M^1$ is one or more doping elements selected from the group consisting of W, Cu, Fe, V, Cr, Ti, Zr, Zn, In, Ta, Y, La, Sr, Ga, Sc, Gd, Sm, Ca, Ce, Nb, Mg, B, or Mo, and $0.8 \leq a1 \leq 1.2$, $0.8 \leq b1 < 1$, $0 < c1 \leq 0.2$, $0 < d1 \leq 0.2$, and $0 < e1 \leq 0.1$, wherein $b1+c1+d1+e1+f1=1$.

In addition, the positive electrode active material may be a single particle-type particle, a secondary particle, or a mixture thereof, and among these, it is more preferable that a single particle-type particle and a secondary particle are mixed and used. Compared to a secondary particle-type positive electrode active material, a single particle-type positive electrode active material has reduced occurrence of side reactions with an electrolyte solution, and thus, when applied, there is an advantage in that gas generation may be reduced to a minimum. In the case of a large-sized battery having a large capacity, an amount of gas generation rapidly increases during charge/discharge compared to a small-sized battery, and as a result, there is a problem in that lifespan properties are degraded. Therefore, it is preferable that a single particle-type positive electrode active material capable of reducing gas generation to a minimum is applied to improve the lifespan properties. However, the single particle-type positive electrode active material has high resistance, and thus, when used alone, there is a problem in that the output and the capacity are degraded. Therefore, in consideration of lifespan, output, and capacity properties, it is preferable that a single particle-type particle and a secondary particle are mixed at a suitable ratio and used as a positive electrode active material. For example, a single particle-type particle : a secondary particle may be mixed at a weight ratio of 50 : 50 to 90 : 10, preferably 50 : 50 to 80 : 20, and used as the positive electrode active material. If the mixing ratio of the single particle-type particle and the secondary particle satisfies the above-described range, excellent electrochemical physical properties may be implemented even in a large-sized battery having a diameter of greater than 40 mm. Specifically, if the content of the single particle-type particle is less than 50 wt%, effects of suppressing gas generation and improving a lifespan are insignificant, and if greater than 90 wt%, resistance is too high, so that output properties may be degraded. Meanwhile, the positive electrode active material layer may selectively further include at least one of a positive electrode conductive material and a positive electrode binder.

The positive electrode conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The positive electrode conductive material may be typically included in an amount of 1 wt% to 30 wt%, preferably 1 wt% to 20 wt%, and more preferably 1 wt% to 10 wt% based on the total weight of a positive electrode active material layer.

The positive electrode binder serves to improve the bonding between positive electrode material particles and the adhesion between the positive electrode material and the positive electrode current collector, and specific examples thereof may include a fluorine resin-based binder containing polyvinylidene fluoride (PVDF) or polytetrafluoroethylene (PTFE), a rubber-based binder containing styrene-butadiene rubber (SBR), acrylonitrile-butadiene rubber, or styreneisoprene rubber, a cellulose-based binder containing carboxyl methyl cellulose (CMC), starch, hydroxy propyl cellulose, or regenerated cellulose, a polyalcohol-based binder containing polyvinyl alcohol, a polyolefinic binder containing polyethylene or polypropylene, a polyimide-based binder, a polyester-based binder, a silane-based binder, and the like, and any one thereof or a mixture of two or more thereof may be used. The positive electrode binder may be included in an amount of 1 wt% to 30 wt%, preferably 1 wt% to 20 wt%, and more preferably 1 wt% to 10 wt% based on the total weight of the positive electrode active material layer.

## 2) Negative electrode

The negative electrode may be manufactured by a method of applying a negative electrode slurry on one surface or both surfaces of a sheet-shaped negative electrode current collector, removing a solvent of the negative electrode slurry through a drying process, and then performing roll-pressing. Meanwhile, a negative electrode including an uncoated portion may be manufactured by a method of not applying the negative electrode slurry in some regions of the negative electrode current collector, for example, one end portion of the negative electrode current collector, during the application of the negative electrode slurry described above.

The negative electrode slurry may be prepared by dispersing a negative electrode active material in a solvent such as distilled water, ethanol, methanol, or isopropyl alcohol.

Alternatively, the negative electrode may also be manufactured by casting the negative electrode slurry on a separate support, and then laminating a film obtained by being peeled off from the support on a negative electrode current collector.

The negative electrode thus manufactured includes a negative electrode current collector, and a negative electrode active material layer, wherein the negative electrode active material layer may include a negative electrode active material.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. The negative electrode current collector may typically have a thickness of 3 $\mu$m to 500 $\mu$m.

In addition, as in the case of the positive electrode current collector, the negative electrode current collector may have microscopic irregularities formed on the surface of the current collector to improve the binding force of the negative electrode active material. For example, the negative electrode current collector may be used in various forms such as a film, a sheet, a foil, a net, a porous body, a foam, and a non-woven body.

The negative electrode active material layer may be positioned on the negative electrode current collector, and specifically, may be positioned on one surface or both surfaces of the negative electrode current collector. The negative electrode active material layer may have a single-layered structure or a multi-layered structure of two or more layers.

As the negative electrode active material, a compound capable of reversible intercalation and deintercalation of lithium may be used, and the type thereof is not particularly limited. Specific examples thereof may include a carbonaceous material such as artificial graphite, natural graphite, graphitized carbon fiber, and amorphous carbon; a (quasi)metallic material alloyable with lithium such as Si, Al, Sn, Pb, Zn, Bi, In, Mg, Ga, Cd, an Si alloy, an Sn alloy, or an Al alloy; a (quasi) metal oxide which may be doped and undoped with lithium such as $SiO_\beta$ ($0 < \beta < 2$), $SnO_2$, a vanadium oxide, and a lithium vanadium oxide; or a composite including the (quasi)metallic material and the carbonaceous material such as an Si-C composite or an Sn-C composite, and any one thereof or a mixture of two or more thereof may be used.

Preferably, the negative electrode active material may include $SiO_\beta$($0 < \beta < 2$), an Si-C composite, or a combination thereof. If the above-described negative electrode active material is included, there is an advantage in that high-capacity properties may be implemented.

The negative electrode active material may be included in an amount of 60 wt% to 99 wt%, preferably 75 wt to 95 wt%, based on the total weight of the negative electrode active material layer.

Meanwhile, the negative electrode active material layer may selectively further include a negative electrode conductive material and a negative electrode binder in addition to the negative electrode active material.

The negative electrode conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fiber, and a carbon nanotube; metal powder or metal fiber of such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The negative electrode conductive material may be typically included in an amount of 1 wt% to 30 wt%, preferably 1 wt% to 20 wt%, and more preferably 1 wt% to 10 wt% based on the total weight of a negative electrode active material layer.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-- butadiene rubber (SBR), fluorine rubber, or various copolymers thereof, and any one thereof or a mixture of two or more thereof may be used. The negative electrode binder may be included in an amount of 1 wt% to 30 wt%, preferably 1 wt% to 20 wt%, and more preferably 1 wt% to 10 wt% based on the total weight of the negative electrode active material layer.

### 3) Separator

The separator is interposed between the positive electrode and the negative electrode, thereby separating the negative electrode and the positive electrode and providing a movement path for lithium ions, and any separator may be used without particular limitation as long as it is a separator typically used in a lithium secondary battery. Specifically, as the separator, a porous polymer film, for example, a porous polymer film manufactured using a polyolefinic polymer such as an ethylene homopolymer, a propylene homopolymer, an ethylene/butene copolymer, an ethylene/hexene copolymer, and an ethylene/methacrylate copolymer, or a stacked structural body having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength.

Meanwhile, the positive electrode 10 and the negative electrode 11 have a structure in which an active material layer 21 is formed on a sheet-shaped current collector 20, and may include an uncoated portion 22 in which the active material layer 21 is not formed in some regions of the current collector 20.

If the positive electrode 10 and the negative electrode 11 including the uncoated portion 22 are used as described above, a battery having a structure in which at least a portion of the uncoated portion of the positive electrode 10 and the negative electrode 11 defines an electrode tab may be implemented without providing a separate electrode tab.

Specifically, the uncoated portion 22 may be formed long along a winding direction X on one side end portion of the current collector 20, and may function as an electrode tab by coupling a current collecting plate to each of the positive electrode uncoated portion and the negative electrode uncoated portion, and connecting the current collecting plate to an electrode terminal.

For example, a battery in which a positive electrode uncoated portion and a negative electrode uncoated portion function as electrode tabs may be manufactured by the following method. First, a separator, a positive electrode, a separator, and a negative electrode are sequentially stacked such that an uncoated portion of the positive electrode and an uncoated portion of the negative electrode are positioned in opposite directions from each other, and then wound in one direction to manufacture a jelly-roll type electrode assembly. Thereafter, the uncoated portions of the positive electrode and the negative electrode are bent in the direction of a winding center C, and then a current collecting plate is welded and coupled to the uncoated portion of the positive electrode and the uncoated portion of the negative electrode, and the current collecting plate is connected to an electrode terminal to manufacture a battery. The current collecting plate has a larger cross-sectional area than a strip-type electrode tab, and the resistance is inversely proportional to the cross-sectional area of a path through which a current flows, so that if a secondary battery is formed in a structure as described above, the cell resistance may be significantly lowered.

Meanwhile, the positive electrode and negative electrode uncoated portions may be processed in the form of a plurality of independently bendable segment pieces, and at least some of the plurality of segment pieces may be bent toward the winding center C of the electrode assembly.

The segment piece may be formed by processing the current collector of each of the positive electrode and the negative electrode through a metal foil cutting process such as laser notching, ultrasonic cutting, or punching.

If the uncoated portions of the positive electrode and the negative electrode are processed in the form of a plurality of segment pieces, stress applied to the uncoated portions during bending may be reduced, which may prevent the uncoated portions from being deformed or damaged, and may improve welding properties with the current collecting plate.

A current collecting plate and an uncoated portion are generally bonded by welding, and in order to improve welding properties, strong pressure should be applied to a welding region of the uncoated portion to bend the uncoated portion to be as flat as possible. However, during the above-described bending process, the shape of the uncoated portion may be distorted and deformed, and a deformed portion may come into contact with an electrode of opposite polarity and cause an internal short circuit or cause a microscopic crack in the uncoated portion. However, if the positive electrode and negative electrode uncoated portions are processed in the form of a plurality of independently bendable segment pieces, stress applied to the uncoated portion during bending may be relieved, which may minimize deformation and damage of the uncoated portion.

In addition, if the uncoated portion is processed in the form of a segment piece as described above, the plurality of segment pieces overlap each other during bending, thereby increasing welding strength with the current collecting plate, and if the latest technology such as laser welding is used, it is possible to prevent a problem in which laser penetrates into the electrode assembly and ablates the separator or the active material. Preferably, at least some of the plurality of bent segment pieces may be overlapped on an upper end and a lower end of the electrode assembly, and the current collecting plate may be coupled onto the plurality of overlapped segment pieces.

Meanwhile, as illustrated in FIG. 3, the electrode assembly according to the present invention may be formed in a structure in which an insulation layer 24 is additionally formed on the positive electrode 10. Specifically, the insulation layer 24 may be formed to cover a portion of the positive electrode active material layer and a portion of the uncoated portion along a direction parallel to the winding direction of the electrode assembly.

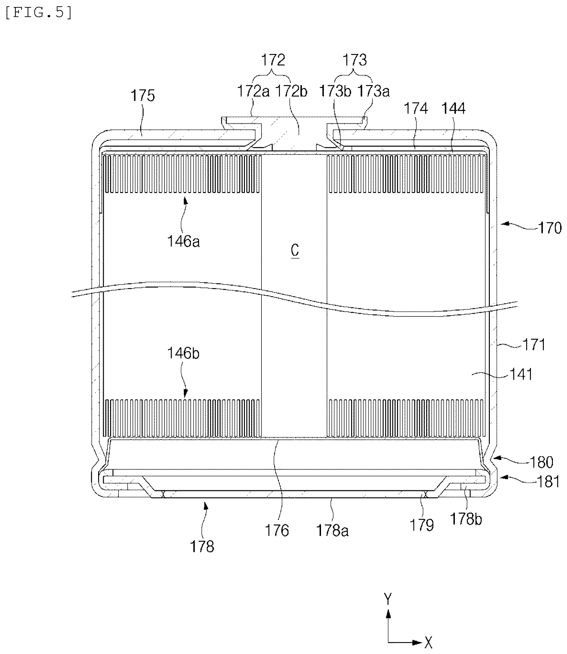

In the case of a tab-less battery using an uncoated portion 22c of the positive electrode 10 and an uncoated portion 22a of the negative electrode 11 as electrode tabs, an electrode assembly is formed such that the positive electrode 10 protrudes toward an upper portion of the separator 12, and the negative electrode 12 protrudes toward a lower portion of the separator 12, and the protruding positive electrode 10 and/or the negative electrode 11 are bent, and then coupled to a current collecting plate. However, if the positive electrode 10 or the negative electrode 11 is bent as described above, the current collector of the positive electrode 10 or the negative electrode 11 is positioned close to an electrode of opposite polarity beyond the separator, and as a result, there is a possibility in that the positive electrode and the negative electrode come into electrical contact, thereby causing an internal short circuit. However, as illustrated in FIG. 5, if the insulation layer 24 which covers a portion of the positive electrode active material layer and the uncoated portion is formed, the insulation layer 24 may prevent the positive electrode 10 and the negative electrode 11 from coming into electrical contact, thereby preventing a short circuit from occurring inside a battery.

Preferably, the insulation layer 24 may be provided on at least one surface of the current collector of the positive electrode 10, and preferably, may be provided on both surfaces of the positive electrode 10.

In addition, the insulation layer 24 may be formed in a region of the positive electrode 10, which may face an active material layer 21a of the negative electrode 11. For example, on a surface of the uncoated portion 22c of the positive electrode 10, which faces the negative electrode 11 after being bent, the insulation layer 24 may extend to an end of the uncoated portion 22c and be formed. However, in the case of a surface opposite to the surface facing the negative electrode 11 after being bent, it is preferable that the insulation layer 24 is formed in a portion of the uncoated portion 22c, for example, only up to a bending point of the uncoated portion 22c. This is because, if the insulation layer 24 is formed in the entire region of an uncoated portion of the surface opposite to the surface facing the negative electrode 11, the uncoated portion is unable to come into electrical contact with a current collecting plate, and thus, is unable to function as an electrode tap.

Meanwhile, the insulation layer 24 may be attached to a positive electrode while securing insulation performance, and the material or component thereof is not particularly limited. For example, the insulation layer may be an insulation coating layer or an insulation tape, and the insulation coating layer may include an organic binder and an inorganic particle. In this case, the organic binder may be, for example, styrene-butadiene rubber (SBR), and the inorganic particle may be alumina oxide, but is not limited thereto.

**(2) Electrolyte**

The electrolyte according to the present invention includes one or more selected from the group consisting of a cyclic carbonate-based solvent and a linear carbonate-based solvent.

The cyclic carbonate-based solvent means an organic solvent having a high viscosity, and specifically, the cyclic carbonate-based solvent may be a non-fluorine-based saturated cyclic carbonate-based solvent. For example, the cyclic carbonate-based solvent may include at least one solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and preferably, may include ethylene carbonate (EC) .If the above-described cyclic carbonate-based solvent is included, a lithium salt may be smoothly dissociated in an electrolyte due to a high dielectric constant, so that the ion conductivity and the cation transport rate may be improved.

The cyclic carbonate-based solvent may be included in an amount of 30 wt% or less, preferably 10 wt% to 25 wt%, and more preferably 15 wt% to 20 wt% based on the total weight of the electrolyte. The linear carbonate-based solvent means an organic solvent having a low viscosity and a low dielectric constant, and specifically, the linear carbonate-based solvent may be a non-fluorine-based linear carbonate-based solvent. For example, at least one solvent selected from the group consisting of dimethyl carbonate (DMC), diethyl carbonate (DEC), dipropyl carbonate, ethylmethyl carbonate (EMC), methylpropyl carbonate, and ethylpropyl carbonate may be used, and specifically, at least one solvent selected from the group consisting of ethylmethyl carbonate (EMC) and dimethyl carbonate (DMC) may be included. If the above-described linear carbonate-based solvent is included, the electrolyte solution impregnability may be improved by preventing the viscosity of the electrolyte from excessively increasing.

The linear carbonate-based solvent may be included in an amount of 40 wt% to 80 wt% or less, preferably 45 wt% to 75 wt%, and more preferably 50 wt% to 70 wt% based on the total weight of the electrolyte.

The cyclic carbonate-based solvent and the linear carbonate-based solvent may be included at a weight ratio of 10:90 to 35:65, preferably at a weight ratio of 15:85 to 30:70, and more preferably at a weight ratio of 20:80 to 28:72. If the above-described range is satisfied, the impregnability of the electrolyte may be improved by preventing the viscosity of the electrolyte from excessively increasing, a lithium salt may be smoothly dissociated by securing a dielectric constant of the electrolyte to a predetermined level or higher, thereby improving ion conductivity, and excellent lifespan properties may be obtained. Accordingly, even during rapid charging, ions are sufficiently present relative to the amount of current flowing in the lithium secondary battery, which may prevent overvoltage from occurring in the negative electrode, and lithium plating caused thereby may be prevented, so that it is possible to improve rapid charging properties of the cylindrical lithium secondary battery.

In addition, the electrolyte may further include, as a solvent, an ester-based solvent. The ester-based solvent may be a non-fluorine-based ester-based solvent. For example, the ester-based solvent may include at least one selected from the group consisting of methyl acetate, ethyl acetate, propyl acetate, butyl acetate, methyl propionate, ethyl propionate, propyl propionate, butyl propionate, γ-butyrolactone, γ-valerolactone, γ-caprolactone, o-valerolactone, and ε-caprolactone.

The electrolyte may contain a lithium salt.

Any compound may be used as the lithium salt without particular limitation as long as it is a compound capable of providing lithium ions used in a lithium secondary battery.Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used.

The lithium salt may be included at a concentration of 0.5 M to 2.0 M, preferably 0.7 M to 1.8 M, and more preferably 1.0 M to 1.5 M. If the concentration of the lithium salt is included in the above-described range, the electrolyte has suitable ion conductivity and viscosity, and thus, may exhibit excellent electrolyte performance, and lithium ions may effectively move, so that lifespan properties, rapid charging properties, and high-temperature lifespan properties of the cylindrical lithium secondary battery may be improved.

Meanwhile, in addition to the above-described electrolyte components, the electrolyte may additionally include an additive for purposes of improving the ion conductivity of the battery, improving the cation transport rate, improving lifespan properties of the battery, suppressing the reduction in battery capacity, improving the discharge capacity of the battery, and the like.

For example, the additive may include at least one additive selected from the group consisting of a non-fluorine-based unsaturated cyclic carbonate-based compound, a halogen-substituted carbonate-based compound, a sultone-based compound, a sulfate-based compound, a borate-based compound, a nitrile-based compound, a benzene-based compound, an amine-based compound, a silane-based compound, and a lithium salt-based compound different from the lithium salt included in the electrolyte.

Specifically, the other additives may be one or more selected from the group consisting of vinylene carbonate (VC), vinylethylene carbonate, fluoroethylene carbonate (FEC), 1,3-propane sultone (PS), 1,4-butane sultone, ethenesultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylene diamine, tetravinylsilane, lithium bis(fluorosulfonyl)imide (LiN(SO$_2$F)$_2$, LiFSI), lithium bis(trifluoromethane sulfonyl) imide (LiN(SO$_2$CF$_3$)$_2$, LiTFSI), LiPO$_2$F$_2$, LiODFB, lithium bisoxalatoborate (LiB(C$_2$O$_4$)$_2$, LiBOB) and LiBF$_4$, and preferably, may be vinylene carbonate.

The electrolyte may include the above-described additive in an amount of 1.5 wt% or less, preferably 1.2 wt% or less, and more preferably 1.0 wt% or less. If the content of the additive is less than 0.01 wt%, the effect of improving the low-temperature output of a battery as well as the high-temperature storage properties and high-temperature lifespan properties of the same is insignificant, and if the content of the other additives is greater than 20 wt%, there is a possibility in that side reactions in the electrolyte may excessively occur during charging and discharging of the battery. Particularly, if the additives for forming an SEI film are added in excess, the additives may not be sufficiently decomposed at a high temperature, and thus, may be present as unreacted substances or in a precipitated state in the electrolyte at room temperature. Accordingly, a side reaction causing the lifespan or resistance properties of the secondary battery to degrade may occur.

If the content of the additive satisfies the above-described range, low-temperature output properties, high-temperature storage properties, and high-temperature lifespan properties of a battery may be improved, side reactions in the electrolyte may be suppressed during charging and discharging of the battery, and the cation transport rate and the ion conductivity in the electrolyte may be additionally improved, so that the lifespan properties, rapid charging properties, and high-temperature lifespan properties of the battery may be improved.

Meanwhile, the viscosity of the electrolyte at 25 °C is 3.23 cP or less. Specifically, the viscosity of the electrolyte at 25 °C may be 3.23 cP or less, 3.22 cP or less, 3.21 cP or less, and 2.00 cP or greater, 2.05 cP or greater, 2.10 cP or greater, 2.15 cP or greater, 2.20 cP or greater, 2.25 cP or greater, 2.30 cP or greater, 2.35 cP or greater, 2.40 cP or greater, 2.45 cP or greater, 2.50 cP or greater, 2.55 cP or greater, 2.60 cP or greater, 2.65 cP or greater, 2.70 cP or greater, 2.75 cP or greater, 2.80 cP or greater, 2.85 cP or greater, 2.90 cP or greater, 2.95 cP or greater, 3.00 cP or greater, 3.05 cP or greater, 3.10 cP or greater, 3.15 cP or greater, 3.20 cP or greater, 3.22 cP or greater, or 3.23 cP or greater. For example, the viscosity of the electrolyte at 25 °C may be 3.23 cP or less, 2.00 cP to 3.23 cP, 2.50 cP to 3.23 cP, 2.95 cP to 3.23 cP, 3.00 cP to 3.23 cP, 3.20 cP to 3.23 cP, or 3.22 cP to 3.23 cP. If the above-described range is satisfied, the mobility of ions in the electrolyte may be excellent even during rapid charging and discharging, and the electrolyte may be smoothly impregnated inside an electrode. Accordingly, the lifespan properties, particularly high-temperature lifespan properties, and rapid charging properties of the battery may be excellent.

### (3) Battery case

The battery case is for accommodating the electrode assembly and the electrolyte, and may be a cylindrical battery case.

The form factor ratio (a value obtained by dividing the diameter of a cylindrical battery by the height thereof, that is, the ratio of a diameter R to a height h) of the cylindrical lithium secondary battery according to the present invention is the same as described above, so that a detailed description thereof will be omitted.

The cylindrical lithium secondary battery according to the present invention may be, for example, a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), a 4680 cell (diameter 46 mm, height 80 mm, form factor ratio 0.575), or a 4695 cell (diameter 46 mm, height 95 mm, form factor ratio 0.484). In a numerical value representing a form factor, the first two numbers represent the diameter R of the lithium secondary battery, and the next two or three numbers represent the height h of the lithium secondary battery.

Next, the structure of the lithium secondary battery according to the present invention will be described.

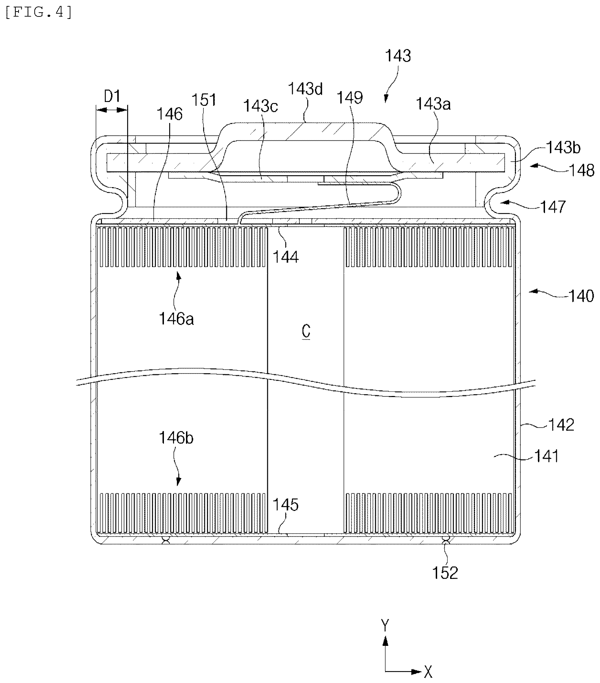

FIG. 4 and FIG. 5 illustrate embodiments of the lithium secondary battery according to the present invention. Hereinafter, referring to FIG. 4 and FIG. 5, the lithium secondary battery according to the present invention will be described. However, FIG. 4 and FIG. 5 merely show an embodiment of the present invention, and the structure of the battery of the present invention is not limited to the ranges disclosed in FIG. 4 and FIG. 5.

FIG. 4 illustrates a cross-sectional view of a lithium secondary battery of a tab-less structure according to an embodiment of the present invention.

Referring to FIG. 4, a lithium secondary battery 140 according to the present invention may include an electrode assembly 141, a battery case 142 in which the electrode assembly 141 and an electrolyte (not shown) are accommodated, and a sealing body 143 which seals an open end portion of the battery case 142.

In this case, in the electrode assembly, a positive electrode, a separator, and a negative electrode are sequentially stacked, and wound in one direction. In addition, the positive electrode and the negative electrode of the electrode assembly each include an uncoated portion in which an active material layer is not formed, and the positive electrode uncoated portion and the negative electrode uncoated portion may be stacked and wound to be positioned at an upper end and a lower end of the electrode assembly, respectively. Since the electrode assembly has been described above, hereinafter, only the rest of the components other than the electrode assembly will be described.

Meanwhile, the battery case 142 is a can-type container having an open end portion formed on an upper side thereof, and is made of a metal material having conductivity, such as aluminum or steel. The battery case accommodates the electrode assembly 141 in an inner space through the upper end opening end portion, and also accommodates the electrolyte (not shown).

Meanwhile, it is preferable that the lithium secondary battery 140 of the present invention does not include a current interruption device (CID).

Meanwhile, as illustrated in FIG. 4, the battery case 142 is electrically connected to an uncoated portion 146b of the negative electrode, and may function as a negative electrode terminal which contacts an external power source and transmits a current applied from the external power source to the negative electrode.

If necessary, a beading part 147 and crimping part 148 may be provided at an upper end of the battery case 142. The beading part 147 may be formed by press-fitting the perimeter of an outer circumferential surface of the battery case 142 to a distance of D1. The beading part 147 prevents the electrode assembly 141 accommodated inside the battery case 142 from exiting through the upper end opening end portion of the battery case 142, and may function as a support on which the sealing body 143 is seated.

The crimping part 148 may be formed in an upper portion of the beading part 147, and has an extended and bent form to surround an outer circumferential surface of a cap plate 143a disposed on the beading part 147 and a portion of an upper surface of the cap plate 143a.

Next, the sealing body 143 is for sealing the open end portion of the battery case 142, and includes the cap plate 143a, and a first gasket 143b which provides airtightness between the cap plate 143a and the battery case 142 and has insulation properties, and if necessary, may further include a connection plate 143c electrically and mechanically coupled to the cap plate 143a. The cap plate 143a is compressed on the beading part 147 formed in the battery case 142, and may be fixed by the crimping part 148.

The cap plate 143a is a component made of a conductive metal material, and covers the upper end opening end portion of the battery case 142. The cap plate 143a is electrically connected to the positive electrode of the electrode assembly 141, and is electrically insulated from the battery case 142 through the first gasket 143b. Therefore, the cap plate 143a may function as a positive electrode terminal of the lithium secondary battery. The cap plate 143a may be provided with a protruding portion 143d formed by protruding upward from a central portion C thereof, and the protruding portion 143d may contact an external power source to allow a current to be applied from the external power source.

Between the cap plate 143a and the crimping part 148, the first gasket 143b may be interposed to secure airtightness of the battery case 142 and to provide electric insulation between the battery case 142 and the cap plate 143a.

Meanwhile, the lithium secondary battery 140 according to the present invention may further include, if necessary, current collecting plates 144 and 145. The current collecting plates are respectively coupled to a positive electrode uncoated portion 146a and a negative electrode uncoated portion 146b, and are respectively connected to electrode terminals (that is, a positive electrode terminal and a negative electrode terminal).

Specifically, the cylindrical battery 140 according to the present invention may include a first current collecting plate 144 coupled to an upper portion of the electrode assembly 141 and a second current collecting plate 145 coupled to a lower portion of the electrode assembly 141.

The first current collecting plate 144 and/or the second current collecting plate 145 may be further included.

The first current collecting plate 144 is coupled to the upper portion of the electrode assembly 141. The first current collecting plate 144 is made of a conductive metal material such as aluminum, copper, or nickel, and is electrically connected to the uncoated portion 146a of the positive electrode. A lead 149 may be connected to the first current collecting plate 144. The lead 149 may extend upward from the electrode assembly 141 to be coupled to the connection plate 143c, or may be directly coupled to a lower surface of the cap plate 143a. The coupling between the lead 149 and another component may be performed through welding. Preferably, the first current collecting plate 144 may be integrally formed with the lead 149. In this case, the lead 149 may have a plate shape extending outward from a central portion of the first current collecting plate 144.

Meanwhile, the first current collecting plate 144 may be coupled to an end portion of the uncoated portion 146a of the positive electrode, and the coupling may be performed by a method such as laser welding, resistance welding, ultrasonic welding, or soldering.

The second current collecting plate 145 is coupled to the lower portion of the electrode assembly 141. The second current collecting plate 145 is made of a conductive metal material such as aluminum, copper, or nickel, and is electrically connected to the uncoated portion 146b of the negative electrode. One surface of the second current collecting plate 145 may be coupled to the uncoated portion 146b of the negative electrode, and a surface on the opposite side may be coupled to an inner bottom surface of the battery case 142. In this case, the coupling may be performed by a method such as laser welding, resistance welding, ultrasonic welding, or soldering.

Meanwhile, the lithium secondary battery 140 according to the present invention may further include, if necessary, an insulator 146. The insulator 146 may be disposed to cover an upper surface of the first current collecting plate 144. Since the insulator 146 covers the first current collecting plate 144, it is possible to prevent the first current collecting plate 144 from directly contacting an inner circumferential surface of the battery case 142.

The insulator 146 is provided with a lead hole 151 to allow the lead 149 extending upward from the first current collecting plate 144 to be withdrawn. The lead 149 is withdrawn upward through the lead hole 151 and coupled to a lower surface of the connection plate 143c or the lower surface of the cap plate 143a.

The insulator 146 may be made of a polymer resin having insulation properties, for example, a polymer resin material such as polyethylene, polypropylene, polyimide, or polybutylene terephthalate.

Meanwhile, the lithium secondary battery 140 according to the present invention may further include, if necessary, a venting portion 152 formed on a lower surface of the battery case 142. The venting portion 152 corresponds to a region thinner than a peripheral region on the lower surface of the battery case 142. Since the venting portion 152 is thin, the venting portion 152 is structurally weak compared to the peripheral region. Therefore, if the pressure inside the lithium secondary battery 140 increases to a predetermined level or higher, the venting portion 152 is ruptured, thereby allowing a gas inside the battery case 152 to be discharged to the outside to prevent the battery from exploding.

FIG. 5 illustrates a cross-sectional view of a lithium secondary battery of a tab-less structure according to another embodiment of the present invention.

Referring to FIG. 5, a lithium secondary battery 170 according to another embodiment of the present invention has different structures of a battery case and a sealing body compared to the lithium secondary battery 140 illustrated in FIG. 4, and has substantially the same configuration of an electrode assembly and an electrolyte.

Specifically, the lithium secondary battery 170 according to another embodiment of the present invention includes a battery case 171 through which a rivet terminal 172 is installed. The rivet terminal 172 is installed on a partially-closed closed surface (upper surface in the drawing) at one end of the battery case 171. The rivet terminal 172 is riveted to a through-hole (a first opening at a first end) of the battery case 171 in a state in which a second gasket 173 having insulation properties is interposed. The rivet terminal 172 is exposed to the outside in a direction opposite to the direction of gravity.

The rivet terminal 172 includes a terminal exposure part 172a and a terminal insertion part 172b. The terminal exposure part 172 a is exposed to the outside of the closed surface of the battery case 171. The terminal exposure part 172a may be positioned at an approximately central portion of the partially closed surface of the battery case 171. The maximum diameter of the terminal exposure part 172a may be formed to be greater than the maximum diameter of the through-hole formed in the battery case 171. The terminal insertion part 172b may be electrically connected to the uncoated portion 146a of the positive electrode through the approximately central portion of the closed surface of the battery case 171. The terminal insertion part 172b may be riveted onto an inner surface of the battery case 171. That is, an end portion of the terminal insertion part 172b may have a form of being bent toward the inner surface of the battery case 171. The maximum diameter of the end portion of the terminal insertion part 172b may be greater than the maximum diameter of the through-hole of the battery case 171.

A lower end surface of the terminal insertion part 172b may be welded to the first current collecting plate 144 connected to the uncoated portion 146a of the positive electrode. An insulation cap 174 made of an insulation material may be interposed between the first current collecting plate 144 and the inner surface of the battery case 171. The insulation cap 174 covers an upper portion of the first current collecting plate 144 and an upper end edge portion of the electrode assembly 141. Accordingly, it is possible to prevent an uncoated portion B3 of the electrode assembly 141 from contacting the inner surface of the battery case 171 having a different polarity, thereby causing a short circuit. The terminal insertion part 172b of the rivet terminal 172 may be welded to the first current collecting plate 144 through the insulation cap 174.

The second gasket 173 is interposed between the battery case 171 and the rivet terminal 172 to prevent the battery case 171 and the rivet terminal 172 having opposite polarities from electrically contacting each other. Accordingly, an upper surface of the battery case 171 having an approximately flat shape may function as a positive electrode terminal of the lithium secondary battery 170.

The second gasket 173 includes a gasket exposure part 173a and a gasket insertion part 173b. The gasket exposure part 173a is interposed between the terminal exposure part 172a of the rivet terminal 172 and the battery case 171. The gasket insertion part 173b is interposed between the terminal insertion portion 172b of the rivet terminal 172 and the battery case 171. The gasket insertion part 173b may be deformed together during the riveting of the terminal insertion part 172b, thereby being in close contact with the inner surface of the battery case 171. The second gasket 173 may be formed of, for example, a polymer resin having insulation properties.

The gasket exposure part 173a of the second gasket 173 may have an extended form to cover an outer circumferential surface of the terminal exposure part 172a of the rivet terminal 172. If the second gasket 173 covers the outer circumferential surface of the rivet terminal 172, it is possible to prevent a short circuit from occurring in a process of coupling an electrical connection component such as a bus bar to the upper surface of the battery case 171 and/or the rivet terminal 172. Although not illustrated in the drawings, the gasket exposure part 173a may have an extended form to cover not only the outer circumferential surface of the terminal exposure part 172a but also a portion of an upper surface thereof.

If the second gasket 173 is formed of a polymer resin, the second gasket 173 may be coupled to the battery case 171 and the rivet terminal 172 by thermal fusion. In this case, airtightness at the coupling interface between the second gasket 173 and the rivet terminal 172 and the coupling interface between the second gasket 173 and the battery case 171 may be enhanced. Meanwhile, if the gasket exposure part 173a of the second gasket 173 has a form extending to the upper surface of the terminal exposure part 172a, the rivet terminal 172 may be integrally coupled to the second gasket 173 by insert injection.

On the upper surface of the battery case 171, the remaining region 175 other than a region occupied by the rivet terminal 172 and the second gasket 173 corresponds to a negative terminal having a polarity opposite to that of the rivet terminal 172.

The second current collecting plate 176 is coupled to the lower portion of the electrode assembly 141. The second current collecting plate 176 is made of a metal material having conductivity, such as aluminum, steel, copper, or nickel, and is electrically connected to the uncoated portion 146b of the negative electrode.

Preferably, the second current collecting plate 176 is electrically connected to the battery case 171. To this end, at least a portion of an edge portion of the second current collecting plate 176 may be interposed and fixed between the inner surface of the battery case 171 and the first gasket 178b. In one example, at least a portion of the edge portion of the second current collecting plate 176 may be fixed to the beading part 180 by welding while being supported on a lower end surface of the beading part 180 formed at a lower end of the battery case 171. In a modified example, at least a portion of an edge portion of the second current collecting plate 176 may be directly welded to an inner wall surface of the battery case 171.

The second current collecting plate 176 may be provided with a plurality of irregularities (not shown) radially formed on a surface facing the uncoated portion 146b. If the irregularities are formed, the irregularities may be press-fitted into the uncoated portion 146b by pressing the second current collecting plate 176.

Preferably, end portions of the second current collecting plate 176 and the uncoated portion 146b may be coupled by welding, for example, laser welding.

A sealing body 178 which seals a lower portion open end of the battery case 171 includes a cap plate 178a and the first gasket 178b. The first gasket 178b electrically separates the cap plate 178a from the battery case 171. A crimping part 181 fixes an edge of the cap plate 178a and the first gasket 178b together. The cap plate 178a is provided with a vent portion 179. The configuration of the vent portion 179 is substantially the same as that of the above-described embodiment.

Preferably, the cap plate 178a is made of a conductive metal material. However, since the first gasket 178b is interposed between the cap plate 178a and the battery case 171, the cap plate 178a has no electrical polarity. The sealing body 178 performs functions of sealing the lower portion open end of the battery case 171 and discharging a gas if the pressure inside the battery cell 170 increases to a threshold value or greater.

Preferably, the rivet terminal 172 electrically connected to the uncoated portion 146a of the positive electrode is used as a positive electrode terminal. In addition, on the upper surface of the battery case 171 electrically connected to the uncoated portion 146b of the negative electrode through the second current collecting plate 176, the portion 175 other than the rivet terminal 172 is used as a negative electrode terminal. As described above, if two electrode terminals are positioned in an upper portion of the lithium secondary battery, it is possible to dispose an electrical connection component such as a bus bar on only one side of the lithium secondary battery 170. This may lead to the simplification of a battery pack structure and the improvement in energy density. In addition, since the portion 175 used as the negative terminal has an approximately flat shape, it is possible to secure a sufficient bonding area in bonding an electrical connection component such as a bus bar. Accordingly, the lithium secondary battery 170 may lower the resistance at a bonding portion of an electrical connection component to a desired level.

If a lithium secondary battery is formed in a tap-less structure as described above, current concentration is reduced compared to a typical battery having an electrode tab, so that heat generation inside the battery may be effectively reduced, and accordingly, an effect of improving thermal safety of the battery may be obtained.

## Battery pack

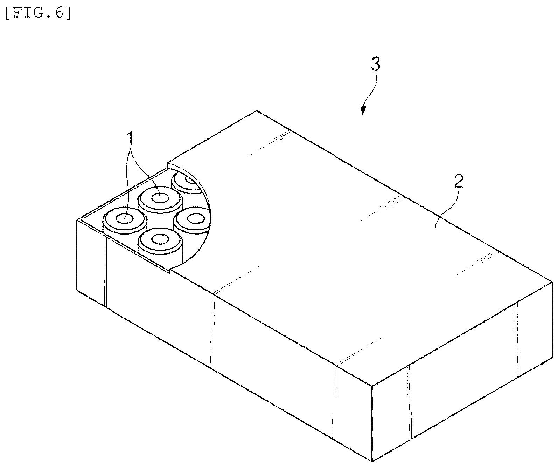

The above-described lithium secondary battery of the present invention may be used as a unit cell for manufacturing a battery pack. FIG. 6 schematically illustrates the configuration of a battery pack according to an embodiment of the present invention. Referring to FIG. 6, a battery pack 3 according to an embodiment of the present invention includes an assembly in which a lithium secondary battery 1 is electrically connected, and a pack housing 2 which accommodates the assembly. The lithium secondary battery 1 is a lithium secondary battery according to the embodiment described above. In the drawing, for convenience of drawing illustration, the illustration of components such as a bus bar, a cooling unit, and an external terminal for electrical connection of the lithium secondary batteries 1 are omitted.

The battery pack 3 may be mounted on a motor vehicle. The motor vehicle may be, as an example, an electric vehicle, a hybrid vehicle, or a plug-in hybrid vehicle. The motor vehicle includes a four-wheeled motor vehicle or two-wheeled motor vehicle.

Hereinafter, the present invention will be described in more detail with reference to specific examples.

**Example 1**

<Preparation of electrolyte>

To an organic solvent in which ethylene carbonate:ethylmethyl carbonate:dimethyl carbonate were mixed at a weight ratio of 20:5:75, $LiPF_6$ was added at a molar concentration of 1.25 M to prepare an electrolyte.

<Manufacturing of cylindrical lithium secondary battery>

To N-methylpyrrolidone, a positive electrode active material, a conductive material, and a binder were added at a weight ratio of 97.32:0.63:2.05 to prepare a positive electrode slurry. In this case, $Li[Ni_{0.92}Co_{0.06}Mn_{0.02}]O_2$ was used as the positive electrode active material, and carbon nanotubes were used as the conductive material and polyvinylidene fluoride (PVDF) was used as the binder. The positive electrode slurry was applied on an aluminum current collector, dried, and then roll-pressed to manufacture a positive electrode.

A negative electrode active material, a conductive material, and a binder were added at a weight ratio of 97.875:0.10:1.15 to distilled water to prepare a negative electrode slurry. In this case, graphite and SiO were mixed at a weight ratio of 97:3 and used as the negative electrode active material, and carbon nanotubes were used as the conductive material, hydrogenated nitrile-based butadiene rubber (HNBR) was used as a conductive material dispersion material, and styrene-butadiene rubber (SBR) and carboxymethylcellulose (CMC) were mixed at a weight ratio of 1.6:0.85 as the binder. In this case, the graphite is a mixture of natural graphite and artificial graphite at a weight ratio of 5:5.

The negative electrode slurry was applied on a copper current collector, dried, and then roll-pressed to manufacture a negative electrode including a negative electrode active material layer.

A separator was interposed between the positive electrode and the negative electrode which were manufactured as described above to stack the separator, the positive electrode, and the negative electrode in the order of separator/positive electrode/separator/negative electrode, which were then wound to manufacture a jelly-roll type electrode assembly in which the radius of a winding central portion was 6 mm.

In the above, the electrode assembly was inserted into a cylindrical battery case having a height of 80 mm and a diameter of 46 mm, and 42 g of the electrolyte prepared in Example 1 above was injected into the case to manufacture a cylindrical lithium secondary battery (4680 cell).

**Example 2**

<Preparation of electrolyte>

To an organic solvent in which ethylene carbonate:ethylmethyl carbonate:dimethyl carbonate were mixed at a weight ratio of 25:5:70, $LiPF_6$ was added at a molar concentration of 1.25 M, and vinylene carbonate was mixed in an amount of 0.5 wt% to prepare an electrolyte.

<Manufacturing of cylindrical lithium secondary battery>

A cylindrical lithium secondary battery (4680 cell) was manufactured in the same manner as described above except that the above-prepared electrolyte was used.

**Example 3**

<Preparation of electrolyte>

To an organic solvent in which ethylene carbonate:ethylmethyl carbonate:dimethyl carbonate were mixed at a weight ratio of 25:5:70, $LiPF_6$ was added at a molar concentration of 1.25 M to prepare an electrolyte.

<Manufacturing of cylindrical lithium secondary battery>

A cylindrical lithium secondary battery (4680 cell) was manufactured in the same manner as described above except that the above-prepared electrolyte was used.

**Comparative Example 1**

<Preparation of electrolyte>

To an organic solvent in which ethylene carbonate:ethylmethyl carbonate:dimethyl carbonate were mixed at a weight ratio of 10:5:85, $LiPF_6$ was added at a molar concentration of 1.25 M to prepare an electrolyte.

<Manufacturing of cylindrical lithium secondary battery>

A cylindrical lithium secondary battery (4680 cell) was manufactured in the same manner as described above except that the above-prepared electrolyte was used.

**Comparative Example 2**

<Preparation of electrolyte>

To an organic solvent in which ethylene carbonate:ethylmethyl carbonate:dimethyl carbonate were mixed at a weight ratio of 30:5:65, $LiPF_6$ was added at a molar concentration of 1.25 M to prepare an electrolyte.

<Manufacturing of cylindrical lithium secondary battery>

A cylindrical lithium secondary battery (4680 cell) was manufactured in the same manner as described above except that the above-prepared electrolyte was used.

**Comparative Example 3**

<Preparation of electrolyte>

To an organic solvent in which ethylene carbonate:ethylmethyl carbonate:dimethyl carbonate were mixed at a weight ratio of 20:5:75, $LiPF_6$ was added at a molar concentration of 1.25 M, and methyl acetate was mixed in an amount of 10 wt% to prepare an electrolyte.

<Manufacturing of cylindrical lithium secondary battery>

A cylindrical lithium secondary battery (4680 cell) was manufactured in the same manner as described above except that the above-prepared electrolyte was used.

**Comparative Example 4**

<Preparation of electrolyte>

To an organic solvent in which ethylene carbonate:ethylmethyl carbonate:dimethyl carbonate were mixed at a weight ratio of 25:5:70, $LiPF_6$ was added at a molar concentration of 1.25 M, and vinylene carbonate was mixed in an amount of 1 wt% to prepare an electrolyte.

<Manufacturing of cylindrical lithium secondary battery>

A cylindrical lithium secondary battery (4680 cell) was manufactured in the same manner as described above except that the above-prepared electrolyte was used.

**Comparative Example 5**

<Preparation of electrolyte>

An electrolyte was prepared in the same manner as the electrolyte prepared in Example 1 above.

<Manufacturing of cylindrical lithium secondary battery>

A separator was interposed between the positive electrode and the negative electrode which were manufactured in Example 1 to stack the separator, the positive electrode, and the negative electrode in the order of separator/positive electrode/separator/negative electrode, which were then wound to manufacture a jelly-roll type electrode assembly in which the radius of a winding central portion was 3.2 mm.

In the above, the electrode assembly was inserted into a cylindrical battery case having a height of 70 mm and a diameter of 21 mm, and 6.54 g of the electrolyte prepared above was injected into the case to manufacture a cylindrical lithium secondary battery (2170 cell).

**Experimental Example 1: Measurement of DIB value and measurement of electrolyte viscosity**

Each of the cylindrical lithium secondary batteries manufactured in Examples 1 to 3 and Comparative Examples 1 to 5 was measured for the DIB value defined by Equation 1 below and the viscosity of the electrolyte, which are shown in Table 1 below.

(1) Measurement of DIB value

Each of the cylindrical lithium secondary batteries manufactured in Examples 1 to 3 and Comparative Examples 1 to 5 was measured for the ion conductivity (C) (unit: mS/mm) of the electrolyte, the cation transport rate ($t^+$) of the electrolyte, and the viscosity (unit: cP) of the electrolyte at 25 °C by the following methods, respectively, and then the DIB value defined by Equation 1 below was calculated and shown in Table 1 below.

[Equation 1]

$$DIB(Diffusion\ of\ Ion\ in\ a\ Battery) = \frac{h}{R} \times \frac{1}{r} \times C \times t^+ \times 1000$$

In Equation 1 above, h (unit: mm) is the height of a cylindrical lithium secondary battery, R (unit: mm) is the diameter of the cylindrical lithium secondary battery, r (unit: mm) is the radius of a winding central portion of the electrode assembly, C (unit: mS/mm) is the ion conductivity of an electrolyte, and $t^+$ is the cation transport rate of the electrolyte.

1) Measurement of ion conductivity (C) of electrolyte

The ion conductivity of the electrolytes applied to the cylindrical lithium secondary batteries manufactured in Examples 1 to 3 and Comparative Examples 1 to 5 was measured under the condition of 25 °C using the Seven Excellence S700 equipment of METTLER TOLEDO Co. Specifically, each of the cylindrical lithium secondary batteries was charged to 4.2 V under the conditions of 0.2 C-rate and 0.01 C cut-off, and discharged to 2.8 V at a 0.2 C-rate to perform an activation process, and then the electrolyte was extracted, wherein a bath was filled with the electrolyte such that a probe for measuring ion conductivity was immersed, and then the ion conductivity was measured using the immersed probe.

2) Measurement of cation transport rate ($t^+$) of electrolyte

Each of the cylindrical lithium secondary batteries manufactured in Examples 1 to 3 and Comparative Examples 1 to 5 was charged to 4.2 V under the conditions of 0.2 C-rate and 0.01 C cut-off, and discharged to 2.8 V at a 0.2 C-rate to perform an activation process, and then a coin cell was manufactured in the form of lithium (Li) metal/electrolyte/lithium (Li) metal by using the extracted electrolyte, and the cation transport rate was measured at 25 °C using a VMP3 Multichannel potentiostat of Bio-logic Science Instruments Co. Specifically, the cation transport rate was obtained by (1) measuring the resistance and current of the coin cell in an initial state, (2) applying a voltage of 10 mV to the coin cell in the initial state and monitoring a current drop to measure the resistance and current of the cell in a steady state in which a current value remained constant after 10 hours, and (3) calculating the cation transport rate by Equation A below.

[Equation A]

$$\text{Cation transport rate } (t^+) = \frac{i_{ss}(\Delta V - i_0 R^0)}{i_0(\Delta V - i_{ss}R^{ss})}$$

In Equation A above, $\Delta V$ is the applied voltage change (10 mV), the $i_0$ is the current (unit: mA) of the coin cell in the initial state, the $R^0$ is the resistance (unit: $\Omega$) of the coin cell in the initial state, the $i_{ss}$ is the current (unit: mA) of the coin cell in the steady state, and the $R^{ss}$ is the resistance (unit: $\Omega$) of the coin cell in the steady state.

(2) Measurement of viscosity of electrolyte at 25 °C

Each of the cylindrical lithium secondary batteries manufactured in Examples 1 to 3 and Comparative Examples 1 to 5 was charged to 4.2 V under the conditions of 0.2 C-rate and 0.01 C cut-off, and discharged to 2.8 V at a 0.2 C-rate to perform an activation process, and then the viscosity of the electrolyte was measured at 25 °C and 0.1 rpm to 1 rpm using a rheometer (Brookfield DVNXCP Rheometer).

[Table 1]

|  | C[mS/mm] | $t^+$ | DIB [mS/mm$^2$] | Viscosity (25 °C) [cP] |
|---|---|---|---|---|
| Example 1 | 1.27 | 0.416 | 153.14 | 2.97 |
| Example 2 | 1.26 | 0.427 | 155.95 | 3.23 |
| Example 3 | 1.26 | 0.426 | 155.58 | 3.21 |
| Comparative Example 1 | 1.21 | 0.402 | 140.99 | 2.24 |
| Comparative Example 2 | 1.29 | 0.435 | 162.65 | 3.28 |
| Comparative Example 3 | 1. 40 | 0.417 | 169.22 | 2.71 |
| Comparative Example 4 | 1.26 | 0.427 | 155.95 | 3.25 |
| Comparative Example 5 | 1.27 | 0.416 | 552.4 | 2.97 |

**Experimental Example 2: High-temperature (55 °C) performance test**

For each of the cylindrical lithium secondary batteries manufactured in Examples 1 to 3 and Comparative Examples 1 to 5, lifespan properties at 55 °C were measured.

Specifically, each of the cylindrical lithium secondary battery batteries manufactured in Examples 1 to 3 and Comparative Examples 1 to 5 was charged to 4.2 V with a constant current of 1.0 C at 55°C with a 0.05 C cut-off. Thereafter, each of the batteries was discharged to 2.5 V with a constant current of 1.0 C.

The above-described charge and discharge behaviors were set to one cycle, and the cycle was repeated 120 times, and then, a capacity retention rate after the 120 cycles was measured to evaluate high-temperature lifespan properties. The measurement results are shown in Table 2 below. The capacity retention rate of the lithium secondary battery manufactured in Example 1 was set to 100, and the capacity retention rate of each of the lithium secondary batteries manufactured in Examples 1 to 3 and Comparative Examples 1 to 5 is shown as a relative value.

In this case, the above-described capacity retention rate was calculated by the following equation.

Capacity retention rate (%) = {(Discharge capacity after 120 cycles/Discharge capacity after 1 cycle)} $\times$ 100

[Table 2]

|  | Capacity retention rate[%] (@120-th cycle) |
|---|---|
| Example 1 | 100 |
| Example 2 | 102.7 |
| Example 3 | 100.7 |

(continued)

|  | Capacity retention rate[%] (@120-th cycle) |
|---|---|
| Comparative Example 1 | 96.5 |
| Comparative Example 2 | 99.1 |
| Comparative Example 3 | 94.6 |
| Comparative Example 4 | 98.1 |
| Comparative Example 5 | 98.17 |

Referring to Table 2 above, it can be confirmed that the cylindrical lithium secondary batteries manufactured in Examples 1 to 3 have better capacity retention rates at a high temperature (55 °C) than the cylindrical lithium secondary batteries manufactured in Comparative Examples 1 to 5.

**Experimental Example 3: Evaluation of rapid charging properties**

By setting charging the cylindrical lithium secondary batteries manufactured in Examples 1 to 3 and Comparative Examples 1 to 5 to 4.1 V with 1.0 C at 20 °C and then discharging the same to 3.0 V with 0.05 C to one cycle, 200 cycles of the charging and discharging were performed, and then, capacity retention rates and resistance increase rates were measured. The measurement results are shown in Table 3 below. In this case, each of the capacity retention rate and the resistance increase rate of the cylindrical lithium secondary battery manufactured in Example 1 was set to 100, and the capacity retention rate and the resistance increase rate of each of the cylindrical lithium secondary batteries manufactured in Examples 1 to 3 and Comparative Examples 1 to 5 are shown as relative values.

In this case, the capacity retention rate and the resistance increase rate were calculated by the following equations.

-

Capacity retention rate (%) = (Discharge capacity after 200 cycles/Initial discharge capacity) $\times$ 100

-

Resistance increase rate (%) = {(Resistance after 200 cycles-Initial resistance)/Initial resistance} $\times$ 100

[Table 3]

|  | Capacity retention rate[%] (@200-th cycle) | Resistance increase rate [%] (@200-th cycle) |
|---|---|---|
| Example 1 | 100 | 100 |
| Example 2 | 103.2 | 77.8 |
| Example 3 | 101.9 | 83.6 |
| Comparative Example 1 | 92.2 | 280.8 |
| Comparative Example 2 | 94.8 | 238.7 |
| Comparative Example 3 | 98.5 | 309.5 |
| Comparative Example 4 | 96.8 | 154.4 |
| Comparative Example 5 | 97.7 | 248 |

Referring to Table 3 above, it can be confirmed that the cylindrical lithium secondary batteries manufactured in Examples 1 to 3 have higher capacity retention rates during rapid charging at room temperature, and significantly lower resistance increase rates than the cylindrical lithium secondary batteries manufactured in Comparative Examples 1 to 5.

(Description of the Reference Numerals or Symbols)

1: Lithium secondary battery
2: Pack housing
3: Battery pack
10: Positive electrode
11: Negative electrode
12: Separator
20: Current collector
21: Active material layer
21a: Negative electrode active material layer
22: Uncoated portion
22a: Uncoated portion of negative electrode
22c: Uncoated portion of positive electrode
24: Insulation layer
C: Winding center
140: Lithium secondary battery
141: Electrode assembly
142: Battery case
143: Sealing body
143a: Cap plate
143b: First gasket
143c: Connecting plate
143d: Protruded portion
144: First current collecting plate
145: Second current collecting plate
146: Insulator
146a: Uncoated portion of positive electrode
146b: Uncoated portion of negative electrode
147: Beading part
148: Crimping part
149: Lead
151: Lead hole
152: Venting portion
170: Lithium secondary battery
171: Battery case
172: Rivet terminal
172a: Terminal exposure part
172b: Terminal insertion part
173: Second gasket
173a: Gasket exposure part
173b: Gasket insertion part
174: Insulation cap
176: Second current collecting plate
178: Sealing body
178a: Cap plate
178b: First gasket
179: Vent portion
180: Beading part
181: Crimping part

**Claims**

1. A cylindrical lithium secondary battery comprising: an electrode assembly in which a positive electrode, a separator, and a negative electrode are sequentially stacked and wound in one direction; an electrolyte; and a battery case in which the electrode assembly and the electrolyte are accommodated,

wherein the electrolyte includes one or more selected from the group consisting of a cyclic carbonate-based solvent and a linear carbonate-based solvent,a diffusion of ions in a battery (DIB) value defined by Equation 1 below is 150 mS/mm$^2$ to 160 mS/mm$^2$, and the viscosity of the electrolyte at 25 °C is 3.23 cP or less:

[Equation 1]

$$DIB(Diffusion\ of\ Ion\ in\ a\ Battery) = \frac{h}{R} \times \frac{1}{r} \times C \times t^+ \times 1000$$

wherein in Equation 1 above,
h (unit: mm) is the height of the cylindrical lithium secondary battery,
R (unit: mm) is the diameter of the cylindrical lithium secondary battery,
r (unit: mm) is the radius of a winding central portion of the electrode assembly,
C (unit: mS/mm) is the ion conductivity of theelectrolyte, and
$t^+$ is the cation transport rate of the electrolyte.

2. The cylindrical lithium secondary battery of claim 1, wherein the C is 1.00 mS/mm to 1.60 mS/mm.

3. The cylindrical lithium secondary battery of claim 1, wherein the $t^+$ is 0.25 to 0.60.

4. The cylindrical lithium secondary battery of claim 1, wherein the cyclic carbonate-based solvent and the linear carbonate-based solvent are included at a weight ratio of 10:90 to 35:65.

5. The cylindrical lithium secondary battery of claim 1, wherein the cyclic carbonate-based solvent is at least one solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

6. The cylindrical lithium secondary battery of claim 1, wherein the linear carbonate-based solvent is at least one solvent selected from the group consisting of dimethyl carbonate (DMC), diethyl carbonate (DEC), dipropyl carbonate, ethylmethyl carbonate (EMC), methylpropyl carbonate, and ethylpropyl carbonate.

7. The cylindrical lithium secondary battery of claim 1, wherein the electrolyte comprises a lithium salt, wherein the lithium salt is included at a concentration of 0.5 M to 2.0 M in the electrolyte.

8. The cylindrical lithium secondary battery of claim 1, wherein the electrolyte comprises an additive in an amount of 1.5 wt% or less.

9. The cylindrical lithium secondary battery of claim 8, wherein the additive is vinylene carbonate.

10. The cylindrical lithium secondary battery of claim 1, wherein the ratio (R/h) of the R to the h is 0.4 or greater.

11. The cylindrical lithium secondary battery of claim 1, wherein the cylindrical lithium secondary battery is a 46110 cell, a 48110 cell, a 4880 cell, or a 4680 cell.

12. The cylindrical lithium secondary battery of claim 1, wherein the cylindrical lithium secondary battery comprises an uncoated portion in which an active material layer is not formed on at least a portion of the positive electrode and the negative electrode, wherein the positive electrode uncoated portion and the negative electrode uncoated portion are defined as electrode tabs.

13. The cylindrical lithium secondary battery of claim 12, wherein the positive electrode uncoated portion and the negative electrode uncoated portion are formed along a direction in which the electrode assembly is wound on one side end portion of the positive electrode and the negative electrode, respectively, and a current collecting plate is coupled to each of the positive electrode uncoated portion and the negative electrode uncoated portion, wherein the current collecting plate is connected to an electrode terminal.

14. The cylindrical lithium secondary battery of claim 12, wherein the positive electrode and negative electrode uncoated portions are processed in the form of a plurality of independently bendable segment pieces, wherein at least some of the plurality of independently bendable segment pieces are bent toward the winding center of the electrode assembly.

15. The cylindrical lithium secondary battery of claim 14, wherein at least some of the plurality of bent independently bendable segment pieces are overlapped on an upper end and a lower end of the electrode assembly, wherein the current collecting plate is coupled onto the plurality of overlapped independently bendable segment pieces.

16. A battery pack comprising the cylindrical lithium secondary battery of any one of claim 1 to claim 15 as a unit cell.

[FIG.1]

direction of winding

[FIG.2]

[FIG.3]

[FIG.4]

[FIG.5]

[FIG.6]

## INTERNATIONAL SEARCH REPORT

| International application No. |
| --- |
| **PCT/KR2024/019771** |

| A. | CLASSIFICATION OF SUBJECT MATTER |
| --- | --- |

**H01M 10/0587**(2010.01)i; **H01M 10/052**(2010.01)i; **H01M 10/0569**(2010.01)i; **H01M 10/0568**(2010.01)i; **H01M 10/0567**(2010.01)i; **H01M 50/538**(2021.01)i; **H01M 50/213**(2021.01)i

According to International Patent Classification (IPC) or to both national classification and IPC

| B. | FIELDS SEARCHED |
| --- | --- |

Minimum documentation searched (classification system followed by classification symbols)

H01M 10/0587(2010.01); H01M 10/052(2010.01); H01M 10/0525(2010.01); H01M 10/056(2010.01); H01M 10/0567(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전해질(electrolyte), 용매(solvent), 카보네이트(carbonate), 이온 확산(ion diffusion ), 점도(viscosity)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2017-0101161 A (LG CHEM, LTD.) 05 September 2017 (2017-09-05)<br>See paragraphs [0025], [0044] and [0048]. | 1-16 |
| A | KR 10-2015-0044637 A (LG CHEM, LTD.) 27 April 2015 (2015-04-27)<br>See paragraphs [0010]-[0011] and [0055]. | 1-16 |
| A | CN 104409767 A (SHANGHAI POWER ENERGY STORAGE BATTERY SYSTEM ENGINEERING TECHNOLOGY CO., LTD. et al.) 11 March 2015 (2015-03-11)<br>See claim 1. | 1-16 |
| A | US 2021-0226207 A1 (NEC CORPORATION) 22 July 2021 (2021-07-22)<br>See paragraphs [0040]-[0041]. | 1-16 |
| A | KR 10-2023-0105406 A (SK ON CO., LTD.) 11 July 2023 (2023-07-11)<br>See claims 1, 7-9 and 13. | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 March 2025** | **11 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/019771**

| Patent document cited in search report | | | Publication date (day/month/year) | Patent family member(s) | | | Publication date (day/month/year) |
|---|---|---|---|---|---|---|---|
| KR | 10-2017-0101161 | A | 05 September 2017 | CN | 108352560 | A | 31 July 2018 |
| | | | | CN | 108352560 | B | 29 December 2020 |
| | | | | EP | 3399582 | A1 | 07 November 2018 |
| | | | | EP | 3399582 | A4 | 06 March 2019 |
| | | | | EP | 3399582 | B1 | 01 April 2020 |
| | | | | JP | 2018-530142 | A | 11 October 2018 |
| | | | | JP | 6704457 | B2 | 03 June 2020 |
| | | | | KR | 10-2155332 | B1 | 11 September 2020 |
| | | | | US | 10818960 | B2 | 27 October 2020 |
| | | | | US | 2018-0309161 | A1 | 25 October 2018 |
| | | | | WO | 2017-146555 | A1 | 31 August 2017 |
| KR | 10-2015-0044637 | A | 27 April 2015 | KR | 10-1591697 | B1 | 04 February 2016 |
| CN | 104409767 | A | 11 March 2015 | CN | 104409767 | B | 24 May 2017 |
| US | 2021-0226207 | A1 | 22 July 2021 | JP | 7028164 | B2 | 02 March 2022 |
| | | | | JP | WO2017-217408 | A1 | 16 May 2019 |
| | | | | US | 11201327 | B2 | 14 December 2021 |
| | | | | WO | 2017-217408 | A1 | 21 December 2017 |
| KR | 10-2023-0105406 | A | 11 July 2023 | CN | 116404250 | A | 07 July 2023 |
| | | | | EP | 4210144 | A2 | 12 July 2023 |
| | | | | EP | 4210144 | A3 | 09 August 2023 |
| | | | | US | 2023-0216088 | A1 | 06 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230173834